# EUROPÄISCHE PATENTANMELDUNG

(11) **EP 3 731 050 A1**
(43) Veröffentlichungstag der Anmeldung: **28.10.2020**
(21) Anmeldenummer: 19171163.9
(22) Anmeldetag: 25.04.2019
(51) Int. Cl.: G05B 23/02

(54) **VISUALISIERUNG EINES ANLAGENSCHAUBILDS MIT DYNAMISCH EINSTELLBAREN PROZESSOBJEKTEN**

(71) Anmelder: Siemens Aktiengesellschaft, 80333 München (DE)
(72) Erfinder: Lutz, Benjamin, 76327 Pfinztal (DE)

(57) **Zusammenfassung**

Eine Visualisierungseinrichtung (1) gibt während des Betriebs einer industriellen technischen Anlage (2) ein Abbild der industriellen technischen Anlage (2) oder eines Teils der industriellen technischen Anlage (2) über ein Sichtgerät (3) an eine Bedienperson (17) aus. Die Visualisierungseinrichtung (1) stellt Sensoren (11, 16) und Aktoren (9, 10, 14, 15) der Anlage (2) bzw. des dargestellten Teils der Anlage (2) in dem Abbild durch Prozessobjekte (18 bis 23) dar. Die Visualisierungseinrichtung (1) stellt die Prozessobjekte (18 bis 23) zunächst in einer anfänglichen Darstellungsart dar. Immer dann, wenn die Visualisierungseinrichtung (1) von der Bedienperson (17) einen entsprechenden Änderungsbefehl (B) entgegennimmt, ändert die Visualisierungseinrichtung (1) die Darstellung mindestens eines der dargestellten Prozessobjekte (18 bis 23) von der anfänglichen Darstellungsart zu einer weiteren Darstellungsart.

## Beschreibung

Die vorliegende Erfindung geht aus von einem Visualisierungsverfahren für ein Abbild einer industriellen technischen Anlage oder eines Teils der industriellen technischen Anlage durch eine Visualisierungseinrichtung,
- wobei die Visualisierungseinrichtung das Abbild während des Betriebs der industriellen technischen Anlage über ein Sichtgerät an eine Bedienperson ausgibt,
- wobei die Visualisierungseinrichtung Sensoren und Aktoren der Anlage bzw. des dargestellten Teils der Anlage in dem Abbild durch Prozessobjekte darstellt,
- wobei die Visualisierungseinrichtung die Prozessobjekte zunächst in einer anfänglichen Darstellungsart darstellt.

Die vorliegende Erfindung geht weiterhin aus von einem Computerprogramm für eine Visualisierungseinrichtung, wobei das Computerprogramm Maschinencode umfasst, der von der Visualisierungseinrichtung abarbeitbar ist, wobei die Abarbeitung des Maschinencodes durch die Visualisierungseinrichtung bewirkt, dass die Visualisierungseinrichtung ein derartiges Visualisierungsverfahren ausführt.

Die vorliegende Erfindung geht weiterhin aus von einer Visualisierungseinrichtung zum Visualisieren eines Abbildes einer industriellen technischen Anlage oder eines Teils der industriellen technischen Anlage,
- wobei die Visualisierungseinrichtung ein Sichtgerät aufweist,
- wobei die Visualisierungseinrichtung mit einem derartigen Computerprogramm programmiert ist, so dass die Visualisierungseinrichtung im Betrieb ein derartiges Visualisierungsverfahren ausführt.

Zum Visualisieren von Abbildern von industriellen technischen Anlagen - insbesondere für Bedien- und Beobachtungssysteme - wird im Stand der Technik im Rahmen einer Projektierung des Abbilds festgelegt, in welcher Darstellungsart welches Element der realen Anlage in dem Abbild dargestellt wird. Dem Projekteur steht für die Elemente der realen Anlage in der Regel jeweils eine Vielzahl von einzelnen Möglichkeiten zur Verfügung, das jeweilige Element in dem Abbild darzustellen. Der Projekteur legt durch Auswahl einer dieser Möglichkeiten fest, wie das jeweilige Element im späteren Betrieb der Visualisierungseinrichtung von der Visualisierungseinrichtung dargestellt werden soll. Die für ein jeweiliges Element getroffene Auswahl entspricht einem Prozessobjekt einer jeweiligen Darstellungsart. Hätte der Projekteur für dasselbe Element eine andere Auswahl getroffen, hätte er zwar dasselbe Prozessobjekt definiert, aber in einer anderen Darstellungsart. Im späteren Betrieb der Visualisierungseinrichtung stellt die Visualisierungseinrichtung die Prozessobjekte in ihrer jeweiligen Darstellungsart dar. Sie können im Stand der Technik nicht geändert werden.

Als Darstellungsarten für Prozessobjekte stehen dem Projekteur im Stand der Technik in der Regel zumindest funktionale Symbole zur Verfügung. Beispielsweise kann der Projekteur ein Ventil (= Beispiel eines Elements der Anlage) durch zwei gleich große gleichseitige Dreiecke symbolisieren, die jeweils eine vertikal verlaufende Seite aufweisen und deren schräg verlaufende Seiten an den nicht an die vertikal verlaufenden Seiten angrenzenden Ecken ineinander übergehen, wobei an dem Schnittpunkt weiterhin der untere Fußpunkt eines "T" angeordnet ist. Ein Sensor wird oftmals durch einen Kreis symbolisiert, in dem ein diagonal von links unten nach rechts oben zeigender Pfeil angeordnet ist. Auch andere symbolische Darstellungen für diese und andere Elemente einer Anlage sind bekannt.

Eine weitere zur Verfügung stehende Art der Darstellung besteht in einer mehr oder minder naturalistischen Seitenansicht des entsprechenden Elements der Anlage. Weiterhin ist es denkbar, eine fotografische Darstellung des realen Elements der Anlage zur Auswahl anzubieten.

In der Praxis wird praktisch immer die Darstellungsart "funktionales Symbol" gewählt, weil sie für den späteren Bediener der Anlage die am schnellsten und einfachsten erfassbare Information über die Funktionalität und Verkettung der einzelnen Elemente der Anlage liefert und vor allem unabhängig von der tatsächlichen Ausgestaltung des jeweiligen Elements der realen Anlage ist. So wird - beispielsweise - ein Ventil stets einheitlich dargestellt, unabhängig davon, wie es tatsächlich aussieht.

Die Vorgehensweise des Standes der Technik ist in der Regel sehr effizient, soweit ausschließlich die Bedienung und Beobachtung der Anlage beispielsweise von einer Leitwarte aus betroffen ist. Wenn es hingegen - beispielsweise aufgrund einer Fehlfunktion eines Elements der realen Anlage - erforderlich ist, an dem Element der realen Anlage selbst Maßnahmen vorzunehmen (beispielsweise um das Element zu überprüfen oder um es zu reparieren oder auszutauschen), ist die Vorgehensweise des Standes der Technik nicht sehr hilfreich. Insbesondere wird beispielsweise einer Bedienperson als Hilfestellung zur Identifizierung des entsprechenden Elements der realen Anlage im Stand der Technik lediglich eine Kennziffer an die Hand gegeben. Die Identifizierung des entsprechenden Elements der realen Anlage vor Ort ist daher aufwendig, umständlich und fehlerträchtig.

Die Aufgabe der vorliegenden Erfindung besteht darin, Möglichkeiten zu schaffen, aufgrund derer einerseits eine effiziente Bedienung und Beobachtung der realen Anlage möglich ist und andererseits insbesondere im Falle von Fehlfunktionen von Elementen der realen Anlage auf einfache Weise eine zuverlässige Identifikation von Elementen der realen Anlage möglich ist.

Die Aufgabe wird durch ein Visualisierungsverfahren mit den Merkmalen des Anspruchs 1 gelöst. Vorteilhafte Ausgestaltungen des Visualisierungsverfahrens sind Gegenstand der abhängigen Ansprüche 2 bis 4.

Erfindungsgemäß wird ein Visualisierungsverfahren der eingangs genannten Art dadurch ausgestaltet, dass die Visualisierungseinrichtung immer dann, wenn sie von der Bedienperson einen entsprechenden Änderungsbefehl entgegennimmt, die Darstellung mindestens eines der dargestellten Prozessobjekte von der anfänglichen Darstellungsart zu einer weiteren Darstellungsart ändert.

Dadurch ist es möglich, im Betrieb der Visualisierungseinrichtung nach Bedarf zwischen verschiedenen Darstellungsarten ein und desselben Prozessobjekts zu wechseln.

Vorzugsweise umfassen die anfängliche Darstellungsart und die weitere Darstellungsart mindestens zwei der Darstellungsarten "funktionales Symbol", "naturalistische Seitenansicht des dem Prozessobjekt tatsächlich zu Grunde liegenden Sensors oder Aktors in schwarz-weiß oder Graustufen" und "Foto des dem Prozessobjekt tatsächlich zu Grunde liegenden Sensors oder Aktors". Beispielsweise kann die anfängliche Darstellungsart die Darstellungsart "funktionales Symbol" sein, während die weitere Darstellungsart eine naturalistische Seitenansicht des dem Prozessobjekt tatsächlich zu Grunde liegenden Sensors oder Aktors in schwarz-weiß oder Graustufen oder ein Foto des dem Prozessobjekt tatsächlich zu Grunde liegenden Sensors oder Aktors ist.

Gegebenenfalls können auch mehr als zwei Darstellungsarten möglich sein, die beispielsweise direkt oder sequenziell nacheinander ausgewählt werden können.

Es ist möglich, dass eine einmal gewählte Darstellungsart beibehalten wird, bis die Visualisierungseinrichtung von der Bedienperson erneut einen Änderungsbefehl erhält. In diesem Fall tritt nach dem Wechsel der Darstellungsart die weitere Darstellungsart an die Stelle der anfänglichen Darstellungsart. Vorzugsweise überwacht die Visualisierungseinrichtung nach einem Wechseln des mindestens einen dargestellten Prozessobjekts zur weiteren Darstellungsart jedoch einen Ablauf einer vorbestimmten Zeit und ändert bei Ablauf der vorbestimmten Zeit automatisch die Darstellung des mindestens einen dargestellten Prozessobjekts von der weiteren Darstellungsart zu der anfänglichen Darstellungsart. Dadurch kann insbesondere erreicht werden, dass Prozessobjekte im Regelfall in einer bevorzugten Darstellungsart dargestellt werden, die sich der Bedienperson für den Regelfall anbietet, beispielsweise in der Darstellungsart "funktionales Symbol".

Vorzugsweise stellt die Visualisierungseinrichtung in dem Abbild Zustandsgrößen der den dargestellten Prozessobjekten zu Grunde liegenden Sensoren und Aktoren unter örtlicher Zuordnung zum jeweiligen Prozessobjekt mit dar. Die Darstellung kann nach Bedarf permanent oder temporär sein. Dadurch ist auf einfache Weise der jeweilige Zustand des jeweiligen Sensors oder Aktors erkennbar.

Die Aufgabe wird weiterhin durch ein Computerprogramm für eine Visualisierungseinrichtung mit den Merkmalen des Anspruchs 5 gelöst. Eine vorteilhafte Ausgestaltung des Computerprogramms ist Gegenstand des abhängigen Anspruchs 6.

Erfindungsgemäß bewirkt die Abarbeitung des Maschinencodes durch die Visualisierungseinrichtung, dass die Visualisierungseinrichtung ein erfindungsgemäßes Visualisierungsverfahren ausführt.

Vorzugsweise ist das Computerprogramm als App für ein mobiles Endgerät ausgebildet. Dadurch kann das Computerprogramm insbesondere auf dem mobilen Endgerät ausgeführt werden. Die Bedienperson kann daher beispielsweise auch vor Ort, also innerhalb der realen Anlage selbst, zwischen den verschiedenen Darstellungsarten wechseln.

Die Aufgabe wird weiterhin durch eine Visualisierungseinrichtung mit den Merkmalen des Anspruchs 7 gelöst. Eine vorteilhafte Ausgestaltung der Visualisierungseinrichtung ist Gegenstand des abhängigen Anspruchs 8.

Erfindungsgemäß ist die Visualisierungseinrichtung mit einem erfindungsgemäßen Computerprogramm programmiert, so dass die Visualisierungseinrichtung im Betrieb ein erfindungsgemäßes Visualisierungsverfahren ausführt.

Vorzugsweise ist die Visualisierungseinrichtung als mobiles Endgerät ausgebildet, insbesondere als Handheld-Gerät und/ oder als Smartphone. Dadurch gestaltet sich die Handhabung der Visualisierungseinrichtung besonders komfortabel.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: eine Visualisierungseinrichtung und eine industrielle technische Anlage,
- FIG 2: die Visualisierungseinrichtung von FIG 1 in einer möglichen Ausgestaltung,
- FIG 3: die industrielle technische Anlage von FIG 1 in einer möglichen Darstellungsart,
- FIG 4: die industrielle technische Anlage von FIG 1 in einer anderen möglichen Darstellungsart,
- FIG 5: eine einzelne Komponente der industriellen technischen Anlage von FIG 1 in einer anderen möglichen Darstellungsart,
- FIG 6: ein Ablaufdiagramm,
- FIG 7: ein Abbild einer industriellen technischen Anlage,
- FIG 8: ein weiteres Abbild der industriellen technischen Anlage,
- FIG 9: ein Ablaufdiagramm und
- FIG 10: ein Ablaufdiagramm.

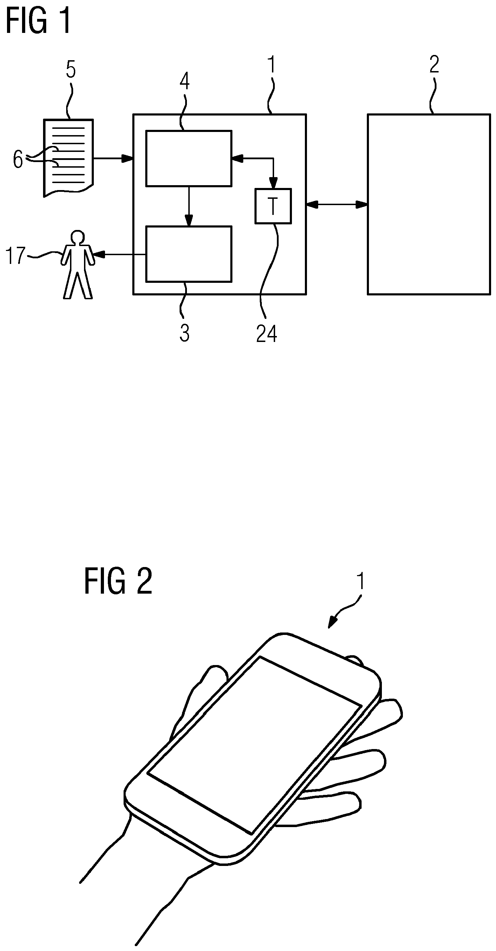

Gemäß FIG 1 ist eine Visualisierungseinrichtung 1 mit einer industriellen technischen Anlage 2 verbunden. Die industrielle technische Anlage 2 ist in FIG 1 nur völlig schematisch dargestellt. Sie wird jedoch später noch näher erläutert werden. Die Visualisierungseinrichtung 1 umfasst ein Sichtgerät 3 und eine Recheneinheit 4. Das Sichtgerät 3 kann insbesondere als Monitor, als Bildschirm oder ähnliche Einheit ausgebildet sein. Das Sichtgerät 3 und die Recheneinheit 4 können zu einer gemeinsamen Einheit zusammengefasst sein. Eine derartige Zusammenfassung zu einer gemeinsamen Einheit ist beispielsweise dann gegeben, wenn die Visualisierungseinrichtung 1 entsprechend der Darstellung in FIG 2 als mobiles Endgerät ausgebildet ist. Ein Beispiel eines mobilen Endgeräts ist ein Smartphone oder ein anderes Handheld-Gerät, also ein Gerät, das man mit einer Hand halten kann, so dass man es mit der anderen Hand bedienen kann. Ein Beispiel eines derartigen anderen Handheld-Geräts ist ein Tablet.

Die Visualisierungseinrichtung 1 ist mit einem Computerprogramm 5 programmiert. Das Computerprogramm 5 kann beispielsweise in dem Fall, dass die Visualisierungseinrichtung 1 als mobiles Endgerät ausgebildet ist, als App für das mobile Endgerät ausgebildet sein. Das Computerprogramm 5 umfasst Maschinencode 6, der von der Visualisierungseinrichtung 1 abarbeitbar ist. Die Programmierung der Visualisierungseinrichtung 1 mit dem Computerprogramm 5 bzw. die Abarbeitung des Maschinencodes 6 durch die Visualisierungseinrichtung 1 bewirkt, dass die Visualisierungseinrichtung 1 ein Visualisierungsverfahren ausführt, das später näher erläutert wird.

Die industrielle technische Anlage 2 von FIG 1 kann insbesondere eine Anlage sein, in der Medien - meist Gase oder Flüssigkeiten -zwischen verschiedenen Komponenten der Anlage 2 gefördert werden. Beispiele derartiger Anlagen 2 sind Chemieanlagen oder Anlagen mit Dampfmaschinen, beispielsweise ein Dampfkraftwerk. Die vorliegende Erfindung wird nachfolgend in Verbindung mit einer derartigen Anlage 2 erläutert, ist aber nicht auf derartige Anlagen 2 beschränkt.

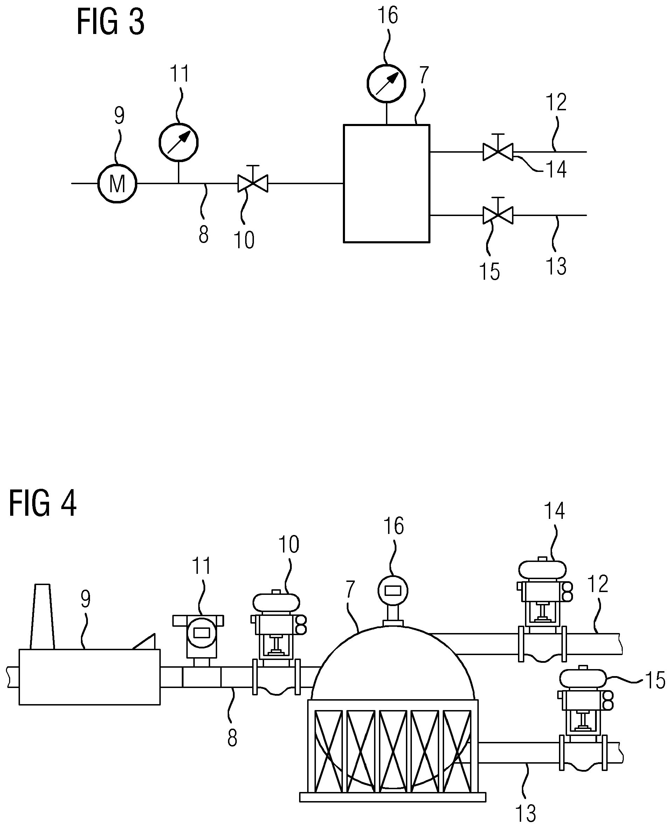

Gemäß den FIG 3 und 4 kann die Anlage 2 von FIG 1 als Komponenten beispielsweise einen Reaktor 7 umfassen. Dem Reaktor 7 kann über eine Leitung 8 ein Anfangsmedium zugeführt werden. Das Zuführen erfolgt mittels einer Fördereinrichtung 9. Die Fördereinrichtung 9 kann bei einem gasförmigen Anfangsmedium beispielsweise als Kompressor ausgebildet sein, bei einem flüssigen Anfangsmedium als Pumpe. In der Leitung 8, in der das Anfangsmedium gefördert wird, können beispielsweise ein Einlassventil 10 und ein Durchflusssensor 11 angeordnet sein. Nach entsprechender Verarbeitung des Anfangsmediums im Reaktor 7 werden über weitere Leitungen 12, 13 beispielsweise aus dem Reaktor 7 Endmedien entnommen. In den Leitungen 12, 13 können Auslassventile 14, 15 angeordnet sein. Weiterhin kann dem Reaktor 7 ein Reaktorsensor 16 zugeordnet sein, beispielsweise ein Temperatursensor, ein Drucksensor oder ein Füllstandsensor. Die Fördereinrichtung 9 und die Ventile 10, 14, 15 können - in der Regel automatisiert - angesteuert werden. Sie werden daher nachfolgend gemeinsam auch als Aktoren bezeichnet.

Die vorliegende Erfindung wird mit dieser Ausgestaltung der Anlage 2 erläutert. Es sei jedoch nochmals darauf hingewiesen, dass die Ausgestaltung der Anlage 2 rein beispielhaft ist. Es sei auch darauf hingewiesen, dass die Anlage 2 oftmals erheblich umfangreicher ist, also wesentlich mehr als die dargestellten Komponenten 7 bis 16 umfasst.

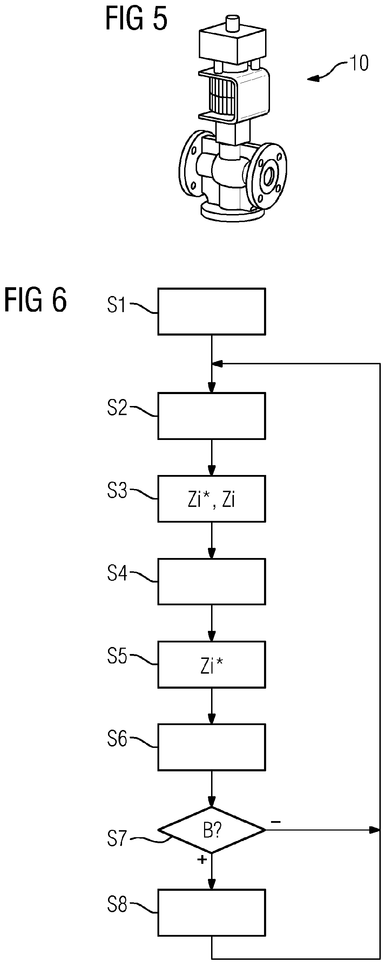

Die Anlage 2 kann entsprechend der Darstellung in den FIG 3 und 4 auf verschiedene Arten dargestellt werden. FIG 3 zeigt beispielsweise eine Darstellung der Anlage 2, in welcher die verschiedenen Komponenten 7 bis 16 in Form von funktionalen Symbolen dargestellt sind. Diese Art der Darstellung ist Fachleuten allgemein bekannt und vertraut. FIG 4 zeigt eine mehr oder minder naturalistische Seitenansicht der Komponenten 7 bis 16. Diese Darstellung kann nach Bedarf in schwarz-weiß oder Graustufen sein. Es sind auch andere Darstellungen möglich. Beispielsweise können alle oder einige der Komponenten 7 bis 16 der Anlage 2 in Form von Fotos der tatsächlichen Komponenten 7 bis 16 dargestellt werden. Dies kann insbesondere für die Aktoren 9, 10, 14, 15 und die Sensoren 11, 16 sinnvoll sein. Gegebenenfalls kann es auch für andere Komponenten 7, 8, 11, 12 der Anlage 2 sinnvoll sein. FIG 5 zeigt rein beispielhaft für das Einlassventil 10 ein derartiges Foto. Das Foto kann nach Bedarf ein Schwarzweißfoto oder ein Farbfoto sein. Es kann die entsprechende Komponente 7 bis 16 der Anlage 2 in einer perspektivischen Darstellung zeigen. Das Foto kann gegebenenfalls auch die Umgebung umfassen, in welcher die entsprechende Komponente 7 bis 16 sich in der realen Anlage 2 befindet. Weiterhin kann das Foto - wohlgemerkt: das Foto als solches - auch einen Identifikator für die entsprechenden Komponente 7 bis 16 der Anlage 2 mit umfassen. Insbesondere ist ein derartiger Identifikator in der Regel in der Anlage 2 selbst auf der entsprechenden realen Komponente angebracht. Das Foto kann derart gewählt sein, dass es diesen Identifikator mit zeigt.

In der Praxis dient die Visualisierungseinrichtung 1 in der Regel als Bedien- und Beobachtungssystem für die Anlage 2. Die Visualisierungseinrichtung 1 führt in diesem Zusammenhang das erfindungsgemäße Visualisierungsverfahren aus. Die Visualisierungseinrichtung 1 für das Visualisierungsverfahren somit während des Betriebs der Anlage 2 aus. Dies wird nunmehr nachstehend in Verbindung mit FIG 6 näher erläutert.

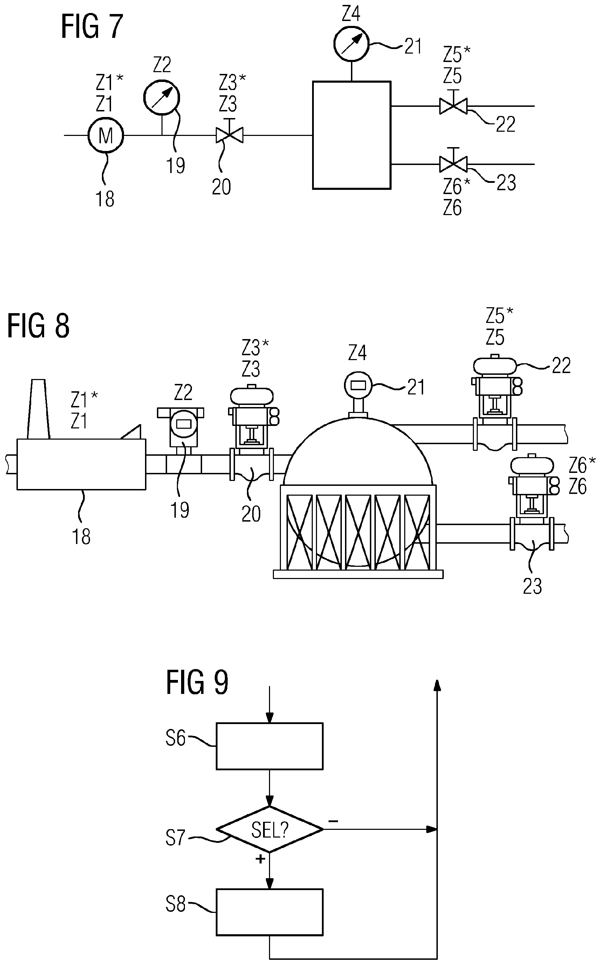

Gemäß FIG 6 kreiert die Visualisierungseinrichtung 1 - unter Abarbeitung des Maschinencodes 6 - in einem Schritt S1 ein Abbild der Anlage 2 (oder eines Teils der Anlage 2). Das kreierte Abbild gibt die Visualisierungseinrichtung 1 in einem Schritt S2 über das Sichtgerät 3 an eine Bedienperson 17 aus. Die verschiedenen Sensoren 11, 16 und Aktoren 9, 10, 14, 15 werden von der Visualisierungseinrichtung 1 in dem Abbild entsprechend der Darstellung in FIG 7 durch korrespondierende Prozessobjekte 18 bis 23 dargestellt.

Die Prozessobjekte 18 bis 23 werden von der Visualisierungseinrichtung 1 zunächst in einer anfänglichen Darstellungsart dargestellt. Beispielsweise kann das ausgegebene Abbild entsprechend der Darstellung in FIG 7 vom Ansatz her so aussehen, wie dies auch in FIG 3 dargestellt ist.

In einem Schritt S3 kann die Visualisierungseinrichtung 1 von der Anlage 2 Zustandsgrößen Zi*, Zi (i = 1, 2, usw.) entgegennehmen. Die Zustandsgrößen Zi*, Zi stellt die Visualisierungseinrichtung 1 in einem Schritt S4 in dem Abbild mit dar. Die Darstellung erfolgt, wie aus FIG 7 ersichtlich ist, unter örtlicher Zuordnung zum jeweiligen Prozessobjekt 18 bis 23. Die Zustandsgrößen Zi*, Zi können nach Bedarf permanent mit dargestellt werden oder temporär dargestellt (eingeblendet) werden. Im Falle einer Einblendung kann die Einblendung beispielsweise aufgrund einer entsprechenden Anfrage der Bedienperson 17 oder aufgrund eines ausgelösten Prozessalarmes oder dergleichen erfolgen.

Entsprechend der rein beispielhaften Darstellung von FIG 7 können die Zustandsgrößen Zi*, Zi für die Sensoren 11, 16 die von den Sensoren 11, 16 erfassten Istgrößen Zi sein oder die Istgrößen Zi umfassen. Für die Aktoren 9, 10, 14, 15 können die Zustandsgrößen Zi*, Zi die Sollwerte Zi* (beispielsweise eine von dem Einlassventil 10 anzunehmende Sollstellung) und die zugehörigen Istwerte Zi (beispielsweise eine von dem Einlassventil 10 tatsächlich eingenommene Iststellung) sein oder diese Werte umfassen. Gegebenenfalls können die Zustandsgrößen Zi*, Zi für die Aktoren 9, 10, 14, 15 auch Stellgrößen, mit denen der jeweilige Aktor 9, 10, 14, 15 angesteuert wird, sein oder umfassen.

In einem Schritt S5 kann die Visualisierungseinrichtung 1 von der Bedienperson 17 Sollwerte Zi* für die Aktoren 9, 10, 14, 15 entgegennehmen. Falls dies der Fall ist, gibt die Visualisierungseinrichtung 1 die Sollwerte Zi* in einem Schritt S6 an die entsprechenden Aktoren 9, 10, 14, 15 aus.

In einem Schritt S7 prüft die Visualisierungseinrichtung 1, ob ihr von der Bedienperson 17 ein Änderungsbefehl B vorgegeben wurde. Die Vorgabe eines Änderungsbefehls B hat die Bedeutung, dass die Bedienperson 17 eine Änderung der Darstellung anfordert. Gibt die Bedienperson 17 keinen Änderungsbefehl B vor, geht die Visualisierungseinrichtung 1 direkt zum Schritt S2 zurück. Anderenfalls führt sie zuvor einen Schritt S8 aus. Im Schritt S8 ändert die Visualisierungseinrichtung 1 die Darstellung mindestens eines der dargestellten Prozessobjekte 18 bis 23 von der anfänglichen Darstellungsart des jeweiligen Prozessobjekts 18 bis 23 zu einer weiteren Darstellungsart des jeweiligen Prozessobjekts 18 bis 23. Beispielsweise kann die Visualisierungseinrichtung 1 in diesem Fall im Rahmen der erneuten Ausführung des Schrittes S2 das Abbild entsprechend der Darstellung in FIG 8 vom Ansatz her so darstellen, wie dies auch in FIG 4 dargestellt ist. Auch in diesem Abbild können gegebenenfalls wieder die Zustandsgrößen Zi*, Zi permanent oder temporär mit dargestellt werden.

Es ist möglich, dass das Ändern der Darstellungsart für alle Prozessobjekte 18 bis 23 erfolgt. Vorzugsweise aber sind die Schritte S7 und S8 entsprechend der Darstellung in FIG 9 wie folgt ausgestaltet:
Im Falle der Ausgestaltung gemäß FIG 9 nimmt die Visualisierungseinrichtung 1 im Rahmen des Schrittes S7 eine Selektion eines Prozessobjekts 18 bis 23 oder mehrerer Prozessobjekte 18 bis 23 entgegen. Im Schritt S8 ändert die Visualisierungseinrichtung 1 nur die Darstellung des selektierten Prozessobjekts 18 bis 23 bzw. der selektierten Prozessobjekte 18 bis 23 von der anfänglichen Darstellungsart des jeweiligen Prozessobjekts 18 bis 23 zu der weiteren Darstellungsart des jeweiligen Prozessobjekts 18 bis 23. Für die anderen, nicht selektierten Prozessobjekte 18 bis 23 behält die Visualisierungseinrichtung 1 die anfängliche Darstellungsart bei.

Die Darstellungsarten der Prozessobjekte 18 bis 23 können nach Bedarf bestimmt sein. Vorzugsweise umfassen sie jedoch mindestens zwei der obenstehend in Verbindung mit den FIG 3 bis 5 erläuterten Darstellungsarten, also der Darstellungsarten "funktionales Symbol", "naturalistische Seitenansicht des dem Prozessobjekt 18 bis 23 tatsächlich zu Grunde liegenden Sensors 11, 16 oder Aktors 9, 10, 14, 15 in schwarz-weiß oder Graustufen" und "Foto des dem Prozessobjekt 18 bis 23 tatsächlich zu Grunde liegenden Sensors 11, 16 oder Aktors 9, 10, 14, 15".

Es ist sogar möglich, dass die möglichen Darstellungsarten mehr als zwei Darstellungsarten umfassen, beispielsweise alle drei der zuletzt genannten Darstellungsarten. In diesem Fall kann im Rahmen der gegebenenfalls wiederholten Ausführung des Schrittes S8 ein sequenzielles Durchschalten durch die Darstellungsarten erfolgen.

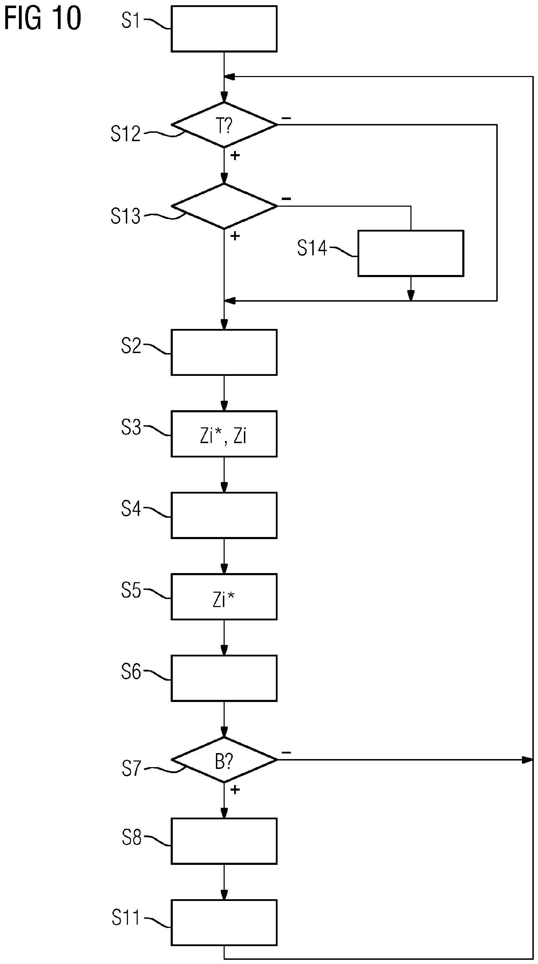

Es ist möglich, dass die Visualisierungseinrichtung 1 die jeweilige Darstellungsart ausschließlich dann wechselt, wenn ihr von der Bedienperson 17 der Änderungsbefehl B vorgegeben wird. Vorzugsweise aber ist das Verfahren von FIG 6 (oder FIG 9) entsprechend FIG 10 ausgestaltet.

FIG 10 umfasst zunächst die Schritte S1 bis S8 von FIG 6. Die Schritte S1 bis S8 werden daher nicht nochmals erläutert. Zusätzlich sind jedoch Schritte S11 bis S14 vorhanden.

Der Schritt S11 wird in Verbindung mit dem Schritt S8 ausgeführt. Er wird also unmittelbar vor oder - so wie in FIG 10 dargestellt - unmittelbar nach dem Ändern der Darstellungsart ausgeführt. Im Schritt S11 startet die Visualisierungseinrichtung 1 einen Timer 24 (siehe FIG 1).

Die Schritte S12 bis S14 werden vor dem Schritt S2 ausgeführt, also in Verbindung mit der Darstellung der Prozessobjekte 18 bis 23. Im Schritt S12 prüft die Visualisierungseinrichtung 1, ob der Timer 24 abgelaufen ist. Die Visualisierungseinrichtung 1 prüft also im Ergebnis, ob eine vorbestimmte Zeit T abgelaufen ist. Bei Ablauf des Timers 24/der vorbestimmten Zeit T führt die Visualisierungseinrichtung 1 den Schritt S13 aus. Im Schritt S13 prüft die Visualisierungseinrichtung 1, ob die momentan selektierte Darstellungsart die anfängliche Darstellungsart ist, also diejenige Darstellungsart, welche die Visualisierungseinrichtung 1 wählt, wenn sie vom Schritt S1 aus zum Schritt S2 übergeht. Wenn dies nicht der Fall ist, selektiert die Visualisierungseinrichtung 1 im Schritt S14 genau diese Darstellungsart. Anderenfalls führt die Visualisierungseinrichtung 1 den Schritt S14 nicht aus.

Damit ist gewährleistet, dass die Visualisierungseinrichtung 1 nach Ablauf der vorbestimmten Zeit T die Darstellung des jeweiligen Prozessobjekts 18 bis 23 automatisch von der weiteren Darstellungsart zu der anfänglichen Darstellungsart ändert. Die anfängliche Darstellungsart ist dadurch eine bevorzugte Darstellungsart. Falls eine derartige bevorzugte Darstellungsart existiert, handelt es sich - falls vorhanden - vorzugsweise um die Darstellungsart "funktionales Symbol". Falls diese Darstellungsart nicht vorhanden ist, handelt es sich - falls vorhanden - vorzugsweise um die Darstellungsart "naturalistische Seitenansicht in schwarz-weiß oder Graustufen". Prinzipiell ist aber auch eine andere Auswahl als bevorzugt möglich.

Es ist möglich, dass die Visualisierungseinrichtung 1 den Ablauf der vorbestimmten Zeit T individuell für das jeweilige Prozessobjekt 18 bis 23 überwacht, so dass sie auch die Schritte S12 bis S14 individuell für das jeweilige Prozessobjekt 18 bis 23 ausführt. Es ist jedoch ebenso möglich, dass die Visualisierungseinrichtung 1 den Ablauf der vorbestimmten Zeit T für alle Prozessobjekte 18 bis 23 gemeinsam überwacht. In diesem Fall kann beispielsweise der Timer 24 jedes Mal neu gestartet werden, wenn die Bedienperson 17 im Schritt S7 den Änderungsbefehl B für (mindestens) ein Prozessobjekt 18 bis 23 neu vorgibt. Weiterhin kann - je nach Ausgestaltung des Visualisierungsverfahrens - die Visualisierungseinrichtung 1 den Timer 24 auch dann jeweils neu starten, wenn die Bedienperson 17 eine andere Eingabe oder Interaktion mit der Visualisierungseinrichtung 1 vorgenommen hat.

Zusammengefasst betrifft die vorliegende Erfindung somit folgenden Sachverhalt:
Eine Visualisierungseinrichtung 1 gibt während des Betriebs einer industriellen technischen Anlage 2 ein Abbild der industriellen technischen Anlage 2 oder eines Teils der industriellen technischen Anlage 2 über ein Sichtgerät 3 an eine Bedienperson 17 aus. Die Visualisierungseinrichtung 1 stellt Sensoren 11, 16 und Aktoren 9, 10, 14, 15 der Anlage 2 bzw. des dargestellten Teils der Anlage 2 in dem Abbild durch Prozessobjekte 18 bis 23 dar. Die Visualisierungseinrichtung 1 stellt die Prozessobjekte 18 bis 23 zunächst in einer anfänglichen Darstellungsart dar. Immer dann, wenn die Visualisierungseinrichtung 1 von der Bedienperson 17 einen entsprechenden Änderungsbefehl B entgegennimmt, ändert die Visualisierungseinrichtung 1 die Darstellung mindestens eines der dargestellten Prozessobjekte 18 bis 23 von der anfänglichen Darstellungsart zu einer weiteren Darstellungsart.

Die vorliegende Erfindung weist viele Vorteile auf. Insbesondere steht der Bedienperson 17 in dem Abbild der Anlage 2 nicht nur statisch eine einzige Darstellungsart für die einzelnen Prozessobjekte 18 bis 23 zur Verfügung, sondern die Bedienperson 17 kann die Darstellungsart nach Bedarf dynamisch wählen und anpassen. Dies ist insbesondere von Vorteil, wenn (mindestens) eine mehr oder minder naturgetreue Darstellung des dem jeweiligen Prozessobjekt 18 bis 23 zu Grunde liegenden Sensors 11, 18 oder Aktors 9, 10, 14, 15 zur Verfügung steht. Denn dadurch vereinfacht sich das Auffinden eines bestimmten Sensors 11, 18 oder Aktors 9, 10, 14, 15 im Feld - also in der Anlage 2 selbst - erheblich. Auch wird eine mobile Bedienung und Steuerung der Anlage 2 vor Ort vereinfacht.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 1: Visualisierungseinrichtung
- 2: industrielle technische Anlage
- 3: Sichtgerät
- 4: Recheneinheit
- 5: Computerprogramm
- 6: Maschinencode
- 7: Reaktor
- 8, 12, 13: Leitungen
- 9: Fördereinrichtung
- 10, 14, 15: Ventile
- 11, 16: Sensoren
- 17: Bedienperson
- 18 bis 23: Prozessobjekte
- 24: Timer
- B: Änderungsbefehl
- S1 bis S14: Schritte
- T: vorbestimmte Zeit
- Zi*, Zi: Zustandsgrößen

## Patentansprüche

1. Visualisierungsverfahren für ein Abbild einer industriellen technischen Anlage (2) oder eines Teils der industriellen technischen Anlage (2) durch eine Visualisierungseinrichtung (1),
- wobei die Visualisierungseinrichtung (1) das Abbild während des Betriebs der industriellen technischen Anlage (2) über ein Sichtgerät (3) an eine Bedienperson (17) ausgibt,
- wobei die Visualisierungseinrichtung (1) Sensoren (11, 16) und Aktoren (9, 10, 14, 15) der Anlage (2) bzw. des dargestellten Teils der Anlage (2) in dem Abbild durch Prozessobjekte (18 bis 23) darstellt,
- wobei die Visualisierungseinrichtung (1) die Prozessobjekte (18 bis 23) zunächst in einer anfänglichen Darstellungsart darstellt,
**dadurch gekennzeichnet,**
**dass** die Visualisierungseinrichtung (1) immer dann, wenn sie von der Bedienperson (17) einen entsprechenden Änderungsbefehl (B) entgegennimmt, die Darstellung mindestens eines der dargestellten Prozessobjekte (18 bis 23) von der anfänglichen Darstellungsart zu einer weiteren Darstellungsart ändert.

2. Visualisierungsverfahren nach Anspruch 1,
**dadurch gekennzeichnet,**
**dass** die anfängliche Darstellungsart und die weitere Darstellungsart mindestens zwei der Darstellungsarten "funktionales Symbol", "naturalistische Seitenansicht des dem Prozessobjekt (18 bis 23) tatsächlich zu Grunde liegenden Sensors (11, 16) oder Aktors (9, 10, 14, 15) in schwarz-weiß oder Graustufen" und "Foto des dem Prozessobjekt (18 bis 23) tatsächlich zu Grunde liegenden Sensors (11, 16) oder Aktors (9, 10, 14, 15)" umfassen.

3. Visualisierungsverfahren nach Anspruch 1 oder 2,
**dadurch gekennzeichnet,**
**dass** die Visualisierungseinrichtung (1) nach einem Wechseln des mindestens einen dargestellten Prozessobjekts (18 bis 23) zur weiteren Darstellungsart einen Ablauf einer vorbestimmten Zeit (T) überwacht und bei Ablauf der vorbestimmten Zeit (T) automatisch die Darstellung des mindestens einen dargestellten Prozessobjekts (18 bis 23) von der weiteren Darstellungsart zu der anfänglichen Darstellungsart ändert.

4. Visualisierungsverfahren nach Anspruch 1, 2 oder 3,
**dadurch gekennzeichnet,**
**dass** die Visualisierungseinrichtung (1) in dem Abbild Zustandsgrößen (Zi*, Zi) der den dargestellten Prozessobjekten (18 bis 23) zu Grunde liegenden Sensoren (11, 16) und Aktoren (9, 10, 14, 15) unter örtlicher Zuordnung zum jeweiligen Prozessobjekt (18 bis 23) permanent oder temporär mit darstellt.

5. Computerprogramm für eine Visualisierungseinrichtung (1), wobei das Computerprogramm Maschinencode (6) umfasst, der von der Visualisierungseinrichtung (1) abarbeitbar ist, wobei die Abarbeitung des Maschinencodes (6) durch die Visualisierungseinrichtung (1) bewirkt, dass die Visualisierungseinrichtung (1) ein Visualisierungsverfahren nach einem der obigen Ansprüche ausführt.

6. Computerprogramm nach Anspruch 5,
**dadurch gekennzeichnet,**
**dass** es als App für ein mobiles Endgerät ausgebildet ist.

7. Visualisierungseinrichtung zum Visualisieren eines Abbildes einer industriellen technischen Anlage (2) oder eines Teils der industriellen technischen Anlage (2),
- wobei die Visualisierungseinrichtung ein Sichtgerät (3) aufweist,
- wobei die Visualisierungseinrichtung mit einem Computerprogramm (5) nach Anspruch 5 oder 6 programmiert ist, so dass die Visualisierungseinrichtung im Betrieb ein Visualisierungsverfahren nach einem der Ansprüche 1 bis 4 ausführt.

8. Visualisierungseinrichtung nach Anspruch 7,
**dadurch gekennzeichnet,**
**dass** sie als ein mobiles Endgerät ausgebildet ist, insbesondere als Handheld-Gerät und/oder als Smartphone.
